# FASCICULE DE BREVET EUROPEEN

(11) **EP 2 244 395 B1**
(45) Date de publication et mention de la délivrance du brevet: **05.06.2013**
(21) Numéro de dépôt: 10290117.0
(22) Date de dépôt: 09.03.2010
(51) Int. Cl.: H04B 7/26, G08B 5/00

(54) **Système de commande synchronisée de composants électriques d'une pluralité d'équipements**
System zur synchronen Steuerung elektrischer Komponenten aus verschiedenen Vorrichtungen
System for synchronously controlling of the electrical components of a plurality of devices

(30) Priorité: 20.04.2009 FR 0901876
(43) Date de publication de la demande: 27.10.2010
(73) Titulaire: Lapresle, Georges, 75016 Paris (FR)
(72) Inventeur: Lapresle, Georges, 75016 Paris (FR)
(74) Mandataire: Potdevin, Emmanuel Eric

(56) Documents cités:
- EP-A1- 1 615 185
- FR-A1- 2 890 177
- JP-A- 10 040 494
- US-B1- 6 625 209

## Description

La présente invention concerne un système de commande synchronisée de composants électriques embarqués sur une pluralité d'équipements.

L'invention trouve un champ d'application très large puisqu'elle peut être mise en oeuvre pour des composants électriques de toute sorte, en particulier des sources lumineuses ou sonores, ou encore des microprocesseurs dans le domaine des équipements informatiques, des moteurs de défilement de supports, affiches par exemple, dans le domaine des équipements d'affichage publicitaire, etc.

Pour des raisons de clarté et de simplicité, le système de commande de composants électriques conforme à l'invention sera décrit et expliqué dans la suite en référence à la commande de sources lumineuses ou sonores, sans que cela n'implique un quelconque caractère limitatif quant aux composants électriques concernés par l'invention.

Dans ce contexte, l'invention a pour objet de permettre une harmonisation des effets d'ensemble produits par une pluralité d'équipements, fixes ou mobiles, disposant de sources lumineuses ou sonores fonctionnant de manière indépendante les unes par rapport aux autres.

Plus précisément, si l'on considère un exemple où les équipements concernés peuvent émettre des signaux séquencés dans le temps, généralement appelés feux clignotants, à partir de sources lumineuses telles que des phares, des diodes électroluminescentes LED, etc., il s'avère en général qu'en l'absence de toute disposition particulière, chaque source clignote sans aucune corrélation avec le clignotement des autres sources, donnant ainsi une impression d'incohérence visuelle à toute personne percevant les clignotements provenant de l'ensemble des équipements émetteurs. On peut citer dans cet ordre d'idée le clignotement erratique produit par les feux d'un ensemble de motocyclettes lors d'un défilé par exemple.

Cette situation est due au fait que les unités de gestion installées dans les équipements qui commandent les différentes sources lumineuses sont autonomes et indépendantes les unes des autres, au sens où chaque unité de gestion comporte une base de temps de séquencement temporel des signaux lumineux émis qui lui est propre, sans relation avec les bases de temps de séquencement des autres unités de gestion.

Pour créer un effet d'ensemble harmonieux, il est nécessaire d'introduire entre les unités de gestion des divers équipements un élément de corrélation qui permette aux différentes sources d'émettre simultanément des séquences temporelles de signaux synchronisées.

La demande de brevet européen n° 1 615 185, la demande de brevet français n° 2 890 177 et la demande de brevet japonais n° 10 040494 apportent à ce problème une solution qui consiste à synchroniser l'ensemble des bases de temps de séquencement des différentes unités de gestion au moyen d'un même signal radio extérieur de synchronisation, DCF77, GSM ou GPS par exemple, destiné à recaler les bases de temps afin d'obtenir un fonctionnement en synchronisme des composants électriques des divers équipements, à savoir ici, des feux clignotants d'éoliennes, des sources et récepteurs sismiques, ainsi que des feux de circulation.

On remarquera que dans les exemples de réalisation proposés dans les documents de l'état de la technique cités plus haut, chaque composant électrique reste commandé par un signal de commande généré à partir de la base de temps de séquencement de l'unité de gestion correspondante, indépendamment du signal radio de synchronisation, avec pour conséquence d'induire, hors synchronisation, des décalages temporels entre les équipements, dus aux dérives des circuits de génération des signaux de commande les uns par rapport aux autres, d'où la nécessité d'effectuer un recalage périodique des bases de temps de séquencement.

Cependant, ce type de solution présente l'inconvénient de ne s'adresser qu'à des équipements comportant une base de temps de séquencement temporel des signaux émis, ce qui en limite considérablement le domaine d'application.

Aussi, le problème technique à résoudre par l'objet de la présente invention est de proposer un système de commande synchronisée de composants électriques embarqués sur une pluralité d'équipements comportant, chacun, une unité de gestion d'au moins un composant électrique, qui permettrait de réaliser une commande synchronisée des composants électriques qui soit simple, fiable et applicable à des équipements dépourvus de base de temps de séquencement, qu'ils soient fixes ou mobiles.

La solution au problème technique posé consiste, selon la présente invention, en ce que, lesdits équipements étant situés dans une zone de réception d'un signal de géolocalisation, l'unité de gestion de chaque équipement comprend :
- une unité de réception apte à extraire dudit signal de géolocalisation, d'une part, des données de géolocalisation dudit équipement, et, d'autre part, un signal d'horloge de référence du signal de géolocalisation,
- une unité de traitement du signal d'horloge reçu par ladite unité de réception, ladite unité de traitement étant apte à générer un signal de commande synchronisée à partir du signal d'horloge de référence, au moins un paramètre caractéristique dudit signal de commande synchronisée étant fonction d'au moins une donnée de géolocalisation,
- une unité de commande apte à commander ledit composant électrique à partir dudit signal de commande synchronisée généré par l'unité de traitement.

Ainsi, toutes les unités de gestion de l'ensemble des équipements utilisent simultanément un même et unique signal de référence pour générer les signaux de commande synchronisée des composants. Le nombre d'équipements peut être quelconque et illimité, l'essentiel étant que tous les équipements soient situés à l'intérieur de ladite zone de réception du signal d'horloge de référence.

Les séquences lumineuses ou sonores produisent alors un effet visuel ou auditif harmonieux qui renforce l'attractivité de l'évènement produit par l'ensemble des équipements. Dans le cas d'un défilé de motocyclistes par exemple, on comprend qu'un clignotement parfaitement synchronisé des feux de toutes les motocyclettes puisse donner au spectacle présenté une dimension émotionnelle supplémentaire.

Dans l'invention, les équipements n'ont nul besoin de base de temps de séquencement temporel des signaux émis, lumineux, sonores ou autres, puisque les signaux de commande synchronisée des composants sont générés à partir d'un même signal de référence, lequel joue donc le rôle de base de temps de séquencement commune à tous les équipements, alors que dans les documents connus de l'état de la technique, chaque équipement dispose d'une base de temps de séquencement qui lui est propre, l'ensemble des bases de temps étant recalées au moyen du signal radio extérieur.

Il convient de signaler également qu'aucune dérive temporelle ne peut se produire entre les signaux de commande synchronisée conformément à l'invention puisqu'ils sont générés en permanence à partir d'un seul et même signal de référence.

De plus, on notera que dans l'invention les séquences temporelles des signaux émis cessent en l'absence de réception du signal de géolocalisation, tandis que dans l'état de la technique elles peuvent se prolonger hors réception du signal de synchronisation extérieur grâce à la base de temps de séquencement propre à chaque équipement.

Avantageusement, l'invention prévoit que ledit paramètre caractéristique du signal de commande synchronisée est choisi parmi les paramètres suivants : fréquence, rapport cyclique, intensité.

Du fait que le signal de commande synchronisée de chaque composant électrique peut être fonction de la position géographique de l'équipement associé, il est possible de créer des séquences lumineuses ou visuelles personnalisées, à la demande, en faisant varier la fréquence et/ou la durée et/ou l'intensité de clignotement de la source selon sa localisation. En particulier, on peut envisager que tous les signaux de commande synchronisée des équipements se trouvant dans une zone géographique donnée soient identiques, mais différents des signaux de commande synchronisée d'équipements se trouvant dans une autre zone géographique.

La programmation du signal de commande synchronisée peut être réalisée individuellement sur chaque équipement, ou bien, comme prévu par l'invention, ledit signal de synchronisation est programmable à distance, au moyen par exemple d'un signal radio commun envoyé à l'ensemble des équipements concernés.

Selon un mode de réalisation de l'invention, ledit signal d'horloge de référence est le signal PPS du système de géolocalisation GPS.

Selon l'invention, lesdits équipements sont mobiles. Dans ce cas, l'effet visuel de sources lumineuses peut être rendu particulièrement attractif si l'on fait varier les paramètres du signal de commande synchronisée des sources en fonction de leur déplacement grâce à la connaissance de leur position géographique. Cependant, l'invention prévoit également que lesdits équipements sont fixes.

Parmi les applications possibles de l'invention, ledit composant électrique est un microprocesseur d'un équipement informatique ou encore un moteur de défilement de supports d'un équipement d'affichage publicitaire.

Enfin, l'invention concerne une réalisation particulière où, ladite unité de commande étant une centrale de commande intermittente de ladite source, ladite centrale de commande intermittente est synchronisée par ledit signal de commande synchronisée.

Comme cela a été mentionné plus haut, une centrale de commande intermittente typique est une centrale de clignotants de feux de véhicules. Dans le cas où les équipements disposent de centrales de clignotants indépendantes les unes des autres, le système de commande de l'invention a alors pour effet de synchroniser entre elles toutes les centrales de clignotants de sorte qu'elles fonctionnent de manière synchrone, c'est-à-dire qu'elles clignotent toutes en même temps.

La description qui va suivre en regard des dessins annexés, donnés à titre d'exemples non limitatifs, fera bien comprendre en quoi consiste l'invention et comment elle peut être réalisée.
La figure 1 est une vue d'ensemble d'un système conforme à l'invention.
La figure 2 est un schéma d'une unité de gestion des sources d'un équipement du système de la figure 1.

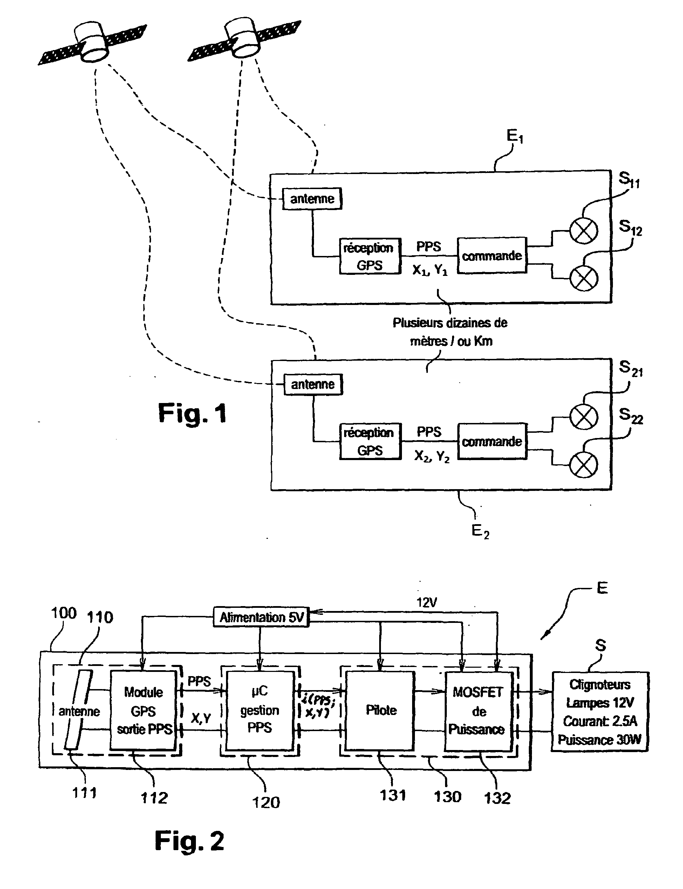

Sur la figure 1 est représenté une pluralité d'équipements, tels que les équipements référencés E₁ et E₂, sur lesquels sont embarquées des sources lumineuses ou sonores. Dans le mode de réalisation montré à la figure 1, chaque équipement E₁, E₂ porte deux sources S₁₁, S₁₂ pour E₁, et S₂₁, S₂₂ pour E₂. Ces sources sont par exemple des feux à LED d'un équipement mobile, tel qu'une motocyclette. Bien entendu, les équipements E₁, E₂ pourraient tout aussi bien être fixes sans pour cela sortir du cadre de l'invention.

Notons que lesdits équipements E₁, E₂ pourraient être également des équipements informatiques embarquant des microprocesseurs, ou des équipements d'affichage publicitaire embarquant des moteurs de défilement de supports comme des affiches.

La distance entre deux équipements E₁, E₂ peut donc être fixe ou variable et prendre des valeurs s'étalant entre quelques dizaines de mètres et plusieurs kilomètres.

Les sources S₁₁, S₁₂, d'une part, et S₁₂, S₂₂, d'autre part, sont commandées de manière autonome et indépendante par des unités de gestion, qui seront décrites en détail plus loin, de sorte que les émissions lumineuses ou sonores qu'elles produisent sont sans aucune corrélation entre elles. Cette absence de corrélation peut être préjudiciable pour l'effet visuel ou sonore perçu par un spectateur lors d'un évènement auquel participe un grand nombre d'équipements, comme un défilé de motocyclettes comportant des feux à LED que l'on souhaite faire clignoter de façon synchrone, même si, et surtout, les équipements E₁, E₂ ne disposent pas de base de temps de séquencement temporel propre, apte à générer le clignotement recherchée.

Comme on peut le voir sur la figure 1, ce but est atteint en exploitant un signal d'horloge de référence d'un système de géolocalisation que tous les équipements peuvent recevoir, ceux-ci étant situés dans une zone de réception de ce signal. La commande des sources des différents équipements peut alors être synchronisée à partir du signal d'horloge de référence qui est unique et le même pour tous les équipements qui le reçoivent. Par ailleurs, les données X₁, Y₁ et X₂, Y₂ de géolocalisation des équipements E₁, E₂ sont enregistrées afin de pouvoir être prises en compte pour générer le signal de commande synchronisée des sources S₁₁, S_{12,}, d'une part, et S₁₂, S₂₂, d'autre part.

Dans l'exemple de la figure 1, le signal d'horloge de référence est celui connu sous le nom de PPS (« Pulse Per Second ») qui peut être extrait des signaux émis par le système de géolocalisation GPS (« Global Positioning System »).

La figure 2 est un schéma d'une unité de gestion de sources d'un équipement qui montre comment l'invention peut être mise en oeuvre de façon pratique dans le cadre d'une synchronisation pilotée par le signal PPS du système GPS.

L'unité 100 de gestion de la figure 2 est destinée à commander de façon synchrone une source S, ou un ensemble de sources, d'un équipement E donné.

Comme le montre la figure 2, l'unité 100 de gestion comprend, en entrée, une unité 110 de réception du signal d'horloge de référence PPS.

Le signal GPS reçu par une antenne 111 de l'unité 110 est traité par un module GPS 112 de manière à en extraire les données X, Y de géolocalisation de l'équipement E ainsi que le signal PPS servant de base de temps de séquencement unique pour la synchronisation recherchée. En effet, ce signal PPS constitue pour le système de commande de sources conforme à l'invention un signal d'horloge de référence qui est le même pour tous les équipements concernés se trouvant dans une zone de réception du signal GPS, et qui, de ce fait, permet de synchroniser la commande des sources de l'ensemble des équipements. Le signal PPS est une base de temps fixe, non programmable, de fréquence de 1 Hz et de rapport cyclique de 50%.

Le signal PPS ainsi extrait du signal GPS par le module GPS 112 est appliqué à une unité 120 de traitement constitué essentiellement par un microcontrôleur chargé de générer un signal i(PPS ; X, Y) de commande synchronisée à partir du signal d'horloge de référence PPS, les paramètres, tels que fréquence, rapport cyclique et intensité, du signal de commande synchronisée étant fonction d'au moins une des données X, Y de géolocalisation. Ce signal i(PPS ; X, Y) de commande synchronisée est donc construit à partir du signal PPS de manière à présenter une fréquence et/ou un rapport cyclique et/ou une intensité ajustables en fonction de la position géographique de l'équipement E dans la zone de réception du signal PPS. On peut ainsi faire varier à la demande, et au besoin à distance, la fréquence de clignotement de sources lumineuses par exemple, ainsi que leur durée de clignotement ou leur intensité.

Le signal i(PPS ; X, Y) de commande synchronisée délivré par l'unité 120 de traitement est à son tour fourni à une unité 130 de commande comprenant un circuit 131 de pilotage chargé de mettre en forme le signal de commande synchronisée avant qu'il soit appliqué à un interrupteur 132 de puissance. De manière connue, l'interrupteur 132 de puissance est réalisé au moyen de transistors MOSFET de puissance destinés à commander, au rythme de la synchronisation choisie, le courant fourni à la source S par une batterie de 12 V par exemple, servant à l'alimentation électrique de l'équipement E.

Dans le mode de réalisation qui vient d'être décrit, le courant fourni à la source S résulte donc de la mise en forme par le signal i(PPS ; X, Y) de commande synchronisée du courant continu délivré par la batterie de l'équipement. Cependant, toute autre source de courant, continu ou non, peut être envisagée.

On peut remarquer que le système de commande de composants électriques qui vient d'être décrit ne met en oeuvre aucune base de temps de séquencement dans aucun équipement, la synchronisation recherchée étant obtenue du fait que les signaux i(PPS ; X, Y) de commande synchronisée sont générés à partir du même signal de référence. Les signaux i(PPS ; X, Y) sont donc des signaux images d'un même et unique signal, à savoir le signal PPS extrait par le module 112, et, de ce fait, se trouvent naturellement synchronisés entre eux en fréquence et en phase.

Dans le cas où l'équipement E dispose d'une unité de commande constituée par une centrale de clignotants par exemple, le signal i(PPS ; X, Y) de commande synchronisée aurait pour fonction de synchroniser le clignotement des centrales de clignotants de tous les équipements concernés.

## Revendications

1. Système de commande synchronisée de composants électriques (S₁₁, S₁₂, S₂₁, S₂₂ ; S) embarqués sur une pluralité d'équipements (E₁, E₂ ; E) comportant, chacun, une unité de gestion (100) d'au moins un composant électrique, **caractérisé en ce que**, lesdits équipements étant situés dans une zone de réception d'un signal de géolocalisation, l'unité (100) de gestion de chaque équipement (E) comprend :
- une unité (110) de réception apte à extraire dudit signal de géolocalisation, d'une part, des données (X₁, Y₁, X₂, Y₂ ; X, Y) de géolocalisation dudit équipement (E), et, d'autre part, un signal (PPS) d'horloge de référence du signal de géolocalisation,
- une unité (120) de traitement du signal (PPS) d'horloge reçu par ladite unité (110) de réception, ladite unité de traitement étant apte à générer un signal i(PPS ; X, Y) de commande synchronisée à partir du signal (PPS) d'horloge de référence, au moins un paramètre caractéristique dudit signal de commande synchronisée étant fonction d'au moins une donnée (X, Y) de géolocalisation,
- une unité (130) de commande apte à commander ledit composant électrique (S) à partir dudit signal i(PPS ; X, Y) de commande synchronisée généré par l'unité (120) de traitement.

2. Système selon la revendication 1, dans lequel ledit paramètre caractéristique du signal i(PPS ; X, Y) de commande synchronisée est choisi parmi les paramètres suivants : fréquence, rapport cyclique, intensité.

3. Système selon l'une des revendications 1 ou 2, dans lequel ledit signal i(PPS ; X, Y) de commande synchronisée est programmable à distance.

4. Système selon l'une quelconque des revendications 1 à 3, dans lequel ledit signal d'horloge de référence est le signal PPS du système de géolocalisation GPS.

5. Système selon l'une quelconque des revendications 1 à 4, dans lequel lesdits équipements sont fixes.

6. Système selon l'une quelconque des revendications 1 à 4, dans lequel lesdits équipements sont mobiles.

7. Système selon l'une quelconque des revendications 1 à 6, dans lequel ledit composant électrique est un microprocesseur d'un équipement informatique.

8. Système selon l'une quelconque des revendications 1 à 6, dans lequel ledit composant électrique est un moteur de défilement de supports d'un équipement d'affichage publicitaire.

9. Système selon l'une quelconque des revendications 1 à 6, dans lequel ledit composant électrique est une source lumineuse.

10. Système selon l'une quelconque des revendications 1 à 6, dans lequel ledit composant électrique est une source sonore.

11. Système selon l'une quelconque des revendications 1 à 10, dans lequel, ladite unité de commande étant une centrale de commande intermittente de ladite source, ladite centrale de commande intermittente est synchronisée par ledit signal de commande synchronisée.

## Patentansprüche

1. System zum synchronisierten Steuern elektrischer Bauteile (S₁₁, S₁₂, S₂₁, S₂₂; S), die in einer Vielzahl von Vorrichtungen (E₁, E₂; E) eingebettet sind, die, jeweils, eine Einheit zum Verwalten (100) mindestens eines elektrischen Bauteils aufweisen, **dadurch gekennzeichnet, dass**, da die Vorrichtungen in einer Zone zum Empfangen eines Geolokalisierungs-Signals befindlich sind, wobei die Verwaltungseinheit (100) jeder Vorrichtung (E) Folgendes umfasst:
- eine Empfangseinheit (110), die dafür ausgelegt ist, aus dem Geolokalisierungs-Signal, einerseits, Geolokalisierung-Datenelemente (X₁, Y₁, X₂, Y₂; X, Y) der Vorrichtung (E) und, andererseits, ein Referenztakt-Signal (PPS) des Geolokalisierungs-Signals zu extrahieren,
- eine Einheit (120) zum Verarbeiten des durch die Empfangseinheit (110) empfangenen Referenztakt-Signals (110), wobei die Verarbeitungseinheit dafür ausgelegt ist, ausgehend von dem Referenztakt-Signal (110) ein synchronisiertes Steuersignal i(PPS; X, Y) zu erzeugen, wobei mindestens ein charakteristischer Parameter des synchronisierten Steuersignals eine Funktion mindestens eines Geolokalisierungs-Datenelements (X, Y) ist,
- eine Steuereinheit (130), die dafür ausgelegt ist, das elektrische Bauteil (S) ausgehend von dem synchronisierten Steuersignal i(PPS; X, Y), das durch die Verarbeitungseinheit (120) erzeugt wird, zu steuern.

2. System nach Anspruch 1, wobei der charakteristische Parameter des synchronisierten Steuersignals i(PPS; X, Y) aus folgenden Parametern ausgewählt ist: Frequenz, Tastgrad, Stärke.

3. System nach einem der Ansprüche 1 oder 2, wobei das synchronisierte Steuersignal i(PPS; X, Y) fernprogrammierbar ist.

4. System nach einem der Ansprüche 1 bis 3, wobei das Referenztakt-Signal das PPS-Signal des Geolokalisierungs-Systems GPS ist.

5. System nach einem der Ansprüche 1 bis 4, wobei die Vorrichtungen ortsfest sind.

6. System nach einem der Ansprüche 1 bis 4, wobei die Vorrichtungen mobil sind.

7. System nach einem der Ansprüche 1 bis 6, wobei das elektrische Bauteil ein Mikroprozessor einer Datenverarbeitungseinrichtung ist.

8. System nach einem der Ansprüche 1 bis 6, wobei das elektrische Bauteil ein Antrieb für den Durchlauf von Trägern einer Werbeanzeige-Einrichtung ist.

9. System nach einem der Ansprüche 1 bis 6, wobei das elektrische Bauteil eine Lichtquelle ist.

10. System nach einem der Ansprüche 1 bis 6, wobei das elektrische Bauteil eine Schallquelle ist.

11. System nach einem der Ansprüche 1 bis 10, wobei die Steuereinheit eine Zentrale zur intermittierenden Steuerung der Quelle ist, wobei die Zentrale zur intermittierenden Steuerung durch das synchronisierte Steuersignal synchronisiert wird.

## Claims

1. A system for synchronized control of electrical components (S₁₁, S₁₂, S₂₁, S₂₂; S) on board a plurality of pieces of equipment (E₁, E₂; E), each piece of equipment including a management unit (100) for managing at least one electrical component, the system being **characterized in that** said pieces of equipment are situated in a reception zone for a global positioning signal, and said management unit (100) of each piece of equipment (E) comprises:
• a receiver unit (110) suitable for extracting from said global positioning signal firstly global positioning data (X₁, Y₁, X₂, X₂; X, Y) for said piece of equipment (E), and secondly a reference clock signal (PPS) of the global positioning signal;
• a processor unit (120) for processing the clock signal (PPS) received by said receiver unit (110), said processor unit being suitable for generating a synchronized control signal i(PPS; X, Y) on the basis of the reference clock signal (PPS), with at least one parameter characteristic of said synchronized control signal being a function of at least one item of global positioning data (X, Y); and
• a control unit (130) suitable for controlling said electrical component (S) on the basis of said synchronized control signal i(PPS; X, Y) generated by the processor unit (120).

2. A system according to claim 1, wherein said characteristic parameter of the synchronized control signal i(PPS; X, Y) is selected from the following parameters: frequency, duty ratio, intensity.

3. A system according to claim 1 or claim 2, wherein said synchronized control signal i(PPS; X, Y) is remotely programmable.

4. A system according to any one of claims 1 to 3, wherein said reference clock signal is the PPS signal of the GPS global positioning system.

5. A system according to any one of claims 1 to 4, wherein said pieces of equipment are stationary.

6. A system according to any one of claims 1 to 4, wherein said pieces of equipment are mobile.

7. A system according to any one of claims 1 to 6, wherein said electrical component is a microprocessor of a computer system.

8. A system according to any one of claims 1 to 6, wherein said electrical component is a motor for scrolling media in an advertising display unit.

9. A system according to any one of claims 1 to 6, wherein said electrical component is a light source.

10. A system according to any one of claims 1 to 6, wherein said electrical component is a sound source.

11. A system according to any one of claims 1 to 10, wherein said control unit is a controller for operating said source intermittently, and said intermittent operation controller is synchronized by said synchronized control signal.
